# EUROPÄISCHE PATENTANMELDUNG

(11) **EP 0 581 000 A2**
(43) Veröffentlichungstag der Anmeldung: **02.02.1994**
(21) Anmeldenummer: 93109335.5
(22) Anmeldetag: 11.06.1993
(51) Int. Cl.: H04L 12/56

(54) **Vermittlungsstelle**

(30) Priorität: 27.06.1992 DE 4221188
(71) Anmelder: Alcatel SEL Aktiengesellschaft, D-70435 Stuttgart (DE)
(72) Erfinder: Gamm, Bernhard, D-7015 Korntal-Münchingen (DE)
(74) Vertreter: Brose, Gerhard

(57) **Zusammenfassung**

Stand der Technik: Schmalband-Vermittlungsstelle (64 kbit/s) mit Koppelnetz und peripheren Baugruppen.

Technisches Problem: Für Signalisierung und Steuerung der peripheren Baugruppen muß innerhalb der Vermittlungsstelle zusätzliche Übertragungskapazität vorhanden sein. N-Kanal-Verbindungen mit hohem Aufwand verbunden.

Grundgedanke: Kapazität des Koppelnetzes durch Verwendung hoher Taktfrequenz deutlich überdimensionieren.

Beispiel: Verwendung eines ATM-Koppelnetzes anstelle eines Schmalband-Koppelnetzes. Anpassung zwischen Koppelnetz und Peripherie.

Vorteile: Peripherie und Koppelnetzstruktur bleiben erhalten; bestehende Software kann übernommen werden. Kürzere Reaktionszeiten.

## Beschreibung

Die Erfindung betrifft eine Vermittlungsstelle mit einem digitalen Koppelnetz und daran angeschlossenen peripheren Baugruppen nach dem Oberbegriff des Anspruchs 1.

Wohl alle derzeit gebauten Vermittlungsstellen weisen diesen Grundaufbau auf. Eine solche Vermittlungsstelle wird beschrieben in "SYSTEM 12 - Übersicht über die Grundbegriffe", R. Van Malderen, Elektrisches Nachrichtenwesen, Band 59, Nummer 1/2, 1985, S. 20 - 28.

Die primäre Aufgabe des Koppelnetzes besteht darin, Verbindungen zwischen je zwei Endteilnehmern herzustellen. Jeder dieser Endteilnehmer kann dabei an einer peripheren Baugruppe dieser Vermittlungsstelle angeschlossen sein oder auch an einer anderen Vermittlungsstelle, die dann über eine andere periphere Baugruppe angeschlossen ist.

Aus praktischen Gründen sind alle Übergänge zwischen einer peripheren Baugruppe und dem digitalen Koppelnetz gleich ausgeführt. Die Kapazität eines solchen Übergangs ist zweckmäßigerweise mit der Kapazität einer üblichen Multiplexverbindung verkoppelt. Im o.g. Beispiel einer Vermittlungsstelle nach SYSTEM 12 können zwischen einer peripheren Baugruppe und dem digitalen Koppelnetz 60 Verbindungen mit je 64 kbit/s in beiden Richtungen übertragen werden. Hinzu kommen noch zweimal zwei Sonderkanäle zu ebenfalls je 64 kbit/s.

Zusätzlich zu dem oben beschriebenen, von außen kommenden und wieder nach außen gehenden Verkehrsaufkommen zur Verbindung von Endteilnehmern untereinander wird innerhalb der Vermittlungsstelle noch zusätzliche Übertragungskapazität benötigt. Diese dient verschiedensten Zwecken, z.B. der Signalisierung beim Verbindungsauf- und abbau, der Verbindung der Steuerungen der peripheren Baugruppen untereinander oder mit einer zentralen Steuereinheit, der Verteilung von Takten und Tönen oder der Aktualisierung von Daten oder Steuerprogrammen.

Für diese zusätzlichen Zwecke wird zum Teil das Koppelnetz mitverwendet, zum Teil sind hierfür separate Netze innerhalb der Vermittlungsstelle vorhanden. Im o.g. Beispiel SYSTEM 12 ist ein Verteilnetz für Takte und Töne vorgesehen; im übrigen steht nur das Digitalkoppelnetz für die interne Kommunikation zur Verfügung (vgl. hierzu Bild 3 auf Seite 21 des o.g. Artikels).

Außerdem ist bei allen so aufgebauten Vermittlungsstellen die immer mehr geforderte Möglichkeit der Herstellung von N-Kanal-Verbindungen nur mit großem Aufwand zu erreichen, weil hier sehr schnell eine innere Blockierung auftritt, wenn mehrere gleichlaufende Verbindungen durch das Koppelnetz aufgebaut werden sollen.

Die Erfindung schafft hier Abhilfe durch eine Vermittlungsstelle nach der Lehre des Anspruchs 1.

Die Erfindung nützt die Tatsache, daß die Kapazität der peripheren Baugruppen aus praktischen Gründen die technologiebedingte Höchstgrenze keinesfalls nützen kann, während eine solche Beschränkung für das Koppelnetz nicht gegeben ist. Das Koppelnetz kann nahezu ohne Zusatzaufwand so ausgebildet werden, daß die technologiebedingt höchste Kapazität verfügbar ist. Die für die eigentliche Vermittlungstätigkeit nicht benötigte Kapazität kann dann für das von den peripheren Baugruppen ausgehende oder für diese bestimmten Signalisierungs- und Steuerungsdatenverkehrsaufkommen verwendet werden. Die interne Auftragsbearbeitung, z.B. der Aufbau einer Verbindung, kann dadurch deutlich beschleunigt werden. Übliche Überlegungen zum Verkehrsaufkommen spielen dann dort keine Rolle mehr.

Bei einem stark überdimensionierten Koppelnetz (deutlich mehr als bei einer Duplizierung) ist auch die Gefahr einer inneren Blockierung sehr gering. Dies kann bei der Dimensionierung des Koppelnetzes derart berücksichtigt werden, daß dieses nur am Übergang zu den peripheren Baugruppen deutlich überdimensioniert wird, nicht jedoch in den mittleren Koppelstufen.

Vorteilhafte Ausgestaltungen der Erfindung sind den Unteransprüchen zu entnehmen.

Die überdimensionierung des Koppelnetzes erfolgt bevorzugt durch Verwendung eines höheren Taktes im Koppelnetz gegenüber den peripheren Baugruppen. Auch ohne die Leitungsführung zu verändern, könnten in bestehenden Koppelnetzen die Übertragungsgeschwindigkeiten auf den einzelnen Leitungen von 2 oder 4 Mbit/s auf 32 Mbit/s gesteigert werden. Durch besondere Anpassungen an höhere Frequenzen, z.B. unter Verwendung von Lichtwellenleitern, kann auch eine Steigerung auf 155 Mbit/s erreicht werden. Zu bevorzugen sind standardisierte Übertragungsgeschwindigkeiten, so daß periphere Baugruppen unter Zuhilfenahme standardisierter Übertragungseinrichtungen auch räumlich von der übrigen Vermittlungsstelle getrennt werden können.

Eine besonders aus wirtschaftlicher Sicht sehr vorteilhafte Ausführungsmöglichkeit liegt darin, eine Schmalband-Vermittlungsstelle mit den dafür entwickelten Schmalband-Baugruppen als periphere Baugruppen und mit einem Breitband-Koppelnetz, insbesondere einem ATM-Koppelnetz, aufzubauen. Es muß dann nur ein geeignetes Übergangselement zwischen dem Koppelnetz und den peripheren Baugruppen entwickelt werden. Die peripheren Baugruppen selbst einschließlich der dafür entwickelten Software können beibehalten werden. Außerdem wird auf diese Weise ein Massenmarkt für ATM-Koppelnetzbausteine geschaffen, der die wirtschaftliche Einführung von ATM begünstigt. Da eine derart aufgebaute Schmalband-Vermittlungsstelle bereits ein ATM-Koppelnetz aufweist, kann sie auch ohne weiteres durch periphere ATM-Baugruppen für ATM-Anwendungen ergänzt oder umgebaut werden.

Als Übergangselemente zwischen dem Koppelnetz und den peripheren Baugruppen werden Vermittlungselemente vorgeschlagen, die sowohl schmalbandige, als auch breitbandige Ein- und Ausgänge aufweisen.

Im folgenden wird die Erfindung anhand eines Ausführsungsbeispiels unter Zuhilfenahme der beiliegenden Zeichnungen weiter erläutert.
- Fig. 1: zeigt den Grundaufbau einer erfindungsgemäßen Vermittlungsstelle,
- Fig. 2: zeigt ein Blockschaltbild eines Vermittlungselements mit schmalbandigen und breitbandigen Ein- und Ausgängen zur Verwendung in der Vermittlungsstelle nach Fig. 1,
- Fig. 3: zeigt ein Blockschaltbild einer weiteren Baugruppe der Vermittlungsstelle nach Fig. 1.

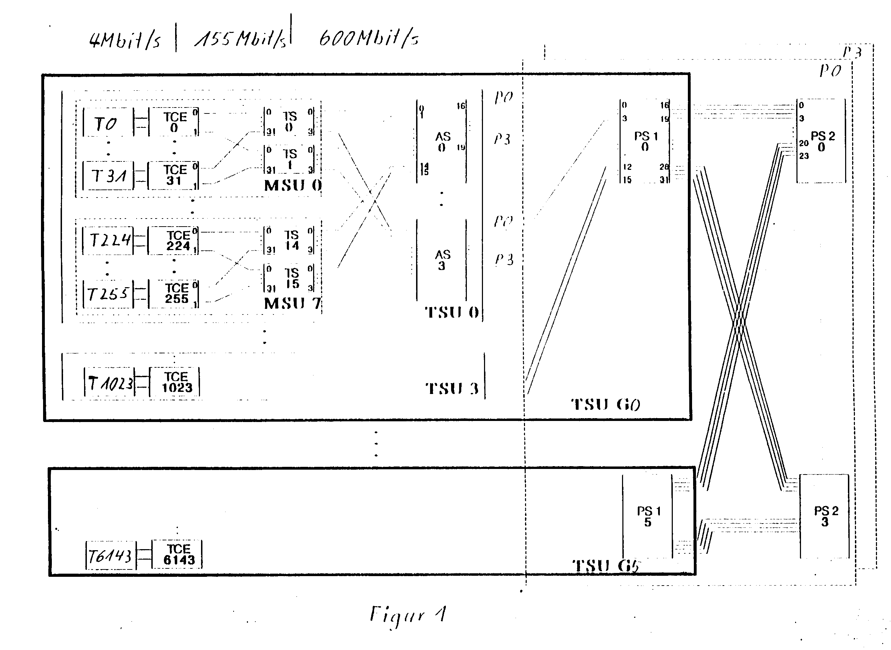

Fig. 1 zeigt eine komplette Vermittlungsstelle. Die Darstellung ist eng angelehnt an die Darstellung im o.g. Artikel von R.Van Malderen. Wie in solchen Darstellungen üblich, ist der Vollausbau gezeigt. Für den Fachmann ergibt es sich von selbst, welche Teile er bei weniger Anschlüssen oder geringerer Verkehrsdichte weglassen kann. Nicht gezeigt in dieser Darstellung sind die nach außen führenden Leitungen.

Kern der Vermittlungsstelle ist ein aus vier Ebenen P0, ..., P3 bestehendes Hauptkoppelfeld, das die eigentliche Vermittlungsaufgabe wahrnimmt. Das Hauptkoppelfeld ist in zwei Stufen aufgebaut. Die erste Stufe enthält in jeder der vier Ebenen sechs Koppelnetzbausteine PS10, ..., PS15. Die sechs Koppelnetzbausteine der ersten Stufe sind innerhalb jeder Ebene durch vier Koppelnetzbausteine PS20, ..., PS23 der zweiten Stufe untereinander verbunden.

Die gesamte Vermittlungsstelle, mit Ausnahme der zweiten Stufe des Hauptkoppelfeldes, ist in sechs Hauptgruppen TSUG0, ..., TSUG5 aufgeteilt. Jeweils einer der sechs Koppelnetzbausteine PS10, ..., PS15 der ersten Stufe bildet mit den drei in den anderen Ebenen liegenden entsprechenden Koppelnetzbausteinen und vier Untergruppen TSU0, ..., TSU3 eine solche Hauptgruppe.

Jede der jeweils vier Untergruppen, Fig. 1 zeigt die Untergruppe TSU0 der Hauptgruppe TSUG0 im Detail, weist vier Zugangs-Koppelnetzbausteine AS0, ..., AS3 und acht Vermittlungsmodule MSU0, ..., MSU7 auf. Das Vermittlungsmodul MSU0 besteht, wie jedes andere Vermittlungsmodul, aus zwei Abschluß-Koppeleinheiten TS0 und TS1 und 32 aus je einem Anschlußteil T0, ..., T31 und einer Modulsteuereinheit TCE0, ..., TCE31 bestehenden Anschlußmodule.

Bis auf die Abschluß-Koppeleinheiten TS0, ... und die fehlende mittlere Stufe im Hauptkoppelfeld entspricht dies der Anordnung in einer Vermittlungsstelle nach SYSTEM 12, wie sie in dem eingangs erwähnten Artikel dargestellt ist. Dieselbe Vermittlungsstelle ist auch beschrieben in den US-Patenten 4,201,889, 4,201,890 und 4,201,891.

In Abweichung von der bekannten Vermittlungsstelle nach SYSTEM 12 wird im vorliegenden Fall jedoch mit unterschiedlich hohen Takten und damit unterschiedlich hohen Übertragungsgeschwindigkeiten gearbeitet.

In den Anschlußteilen T0, ..., T6143 und in den Modulsteuereinheiten TCE0, ..., TCE6143 wird, wie bei SYSTEM 12, mit 4 Mbit/s gearbeitet. Die Anschlußteile, in die der größte Entwicklungsaufwand, einschließlich des größten Teiles der Software, invertiert ist, können unverändert übernommen werden.

In den Modulsteuereinheiten erfolgt ein Übergang von 4 Mbit/s auf 155 Mbit/s und umgekehrt. Die Zahl der Eingangs- und Ausgangsleitungen ist auf beiden Seiten gleich, nämlich je zwei. Damit ist die Kapazität auf der breitbandigen Seite, d.h. bei 155 Mbit/s, recht deutlich überdimensioniert. Durch diese Überdimensionierung ist diese breitbandige Seite in der Lage, viele den inneren Ablauf betreffende Steuerungs- und Signalisierungsaufgaben mit zu übernehmen, ohne die eigentliche Vemittlungsaufgabe irgendwie zu beeinträchtigen. Auch die Vermittlung von Kanalbündeln (nX64 kbit/s) ist ohne Blockierungsgefahr möglich.

In den Abschluß-Koppeleinheiten TS0, ... erfolgt eine weitere Erhöhung der übertragungsgeschwindigkeit von 155 Mbit/s auf 600 Mbit/s, verbunden mit einem Übergang auf optische Verbindungsleitungen. Dieser Übergang ist verbunden mit einer Konzentration des Verkehrs von 32 Eingangsleitungen auf vier Ausgangsleitungen.

Bis zur zweiten Stufe des Koppelnetzes kann noch weiter konzentriert werden, ohne lokale Blockierungen befürchten zu müssen.

Die breitbandige Seite ist im vorliegenden Beispiel in ATM-Technik aufgebaut. Der Begriff ATM wird hier in seiner noch etwas ursprünglicheren Bedeutung verwendet.

Insbesondere eine besondere Normung der Länge der Zellen wird hier nicht vorausgesetzt. Besonders vorteilhaft, wenn auch nicht zwingend, ist hier die Verwendung unterschiedlich langer ATM-Zellen im Koppelnetz. Für die Durchschaltung einer Verbindung mit 64 kbit/s wird dabei die kürzestmögliche Länge verwendet; bei Datenpaketen, insbesondere Steuerdatenpaketen, wird die Länge der Zellen an die der Datenpakete angepaßt.

Die Koppelnetzbausteine AS0, ..., AS3; PS10, ..., PS15 und PS20, ..., PS23 weisen je 32 Eingänge und 32 Ausgänge aus. Deren Realisierung ist beschrieben in "Elektrisches Nachrichtenwesen", Band 64, Nummer 2/3, 1990 von D. Becker et al, S. 147 - 155, "Architektur des Breitbandvermittlungssystems von Alcatel" und von D. Böttle et al, S. 156 - 165, "Das ATM-Koppelfeld von Alcatel und seine Eigenschaften". Diese Koppelnetzbausteine sind dort als Koppelbaugruppe bzw. Grundkoppelmodul bezeichnet. Diese Koppelnetzbausteine sind auch im US-Patent 5,091,903 beschrieben.

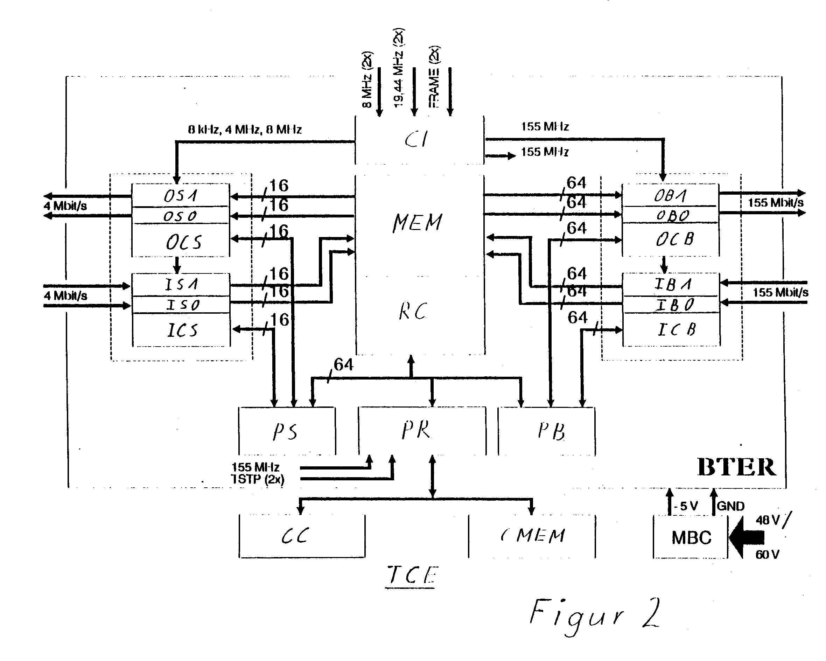

Anhand der Fig. 2 wird nun der Aufbau einer Modulsteuereinheit TCE beschrieben. Die Modulsteuereinheit TCE weist grundsätzlich denselben Aufbau auf, wie die Modulsteuereinheit im schon mehrfach genannten SYSTEM 12 (z.B. nach Bild 3 des Artikels von R.Van Malderen). Der Hauptteil ist eine Zugangseinheit BTER, die durch ein Steuerteil mit einem Steuerprozessor CC und einem zugehörigen Speicher CMEM ergänzt wird. Fig. 2 zeigt außerdem noch einen Spannungskonverter MBC, der die gegebene Betriebsspannung von 48 V oder 60 V auf die benötigte einseitig geerdete Spannung von -5 V umsetzt.

Die Zugangseinheit BTER ist im Prinzip ein Vermittlungselement. Im vorliegenden Fall hat es zwei schmalbandige Eingänge mit den schmalbandigen Eingangsschaltungen IS0 und IS1 und einer zugehörigen schmalbandigen Eingangsschaltungssteuerung ICS und zwei schmalbandige Ausgänge mit den schmalbandigen Ausgangsschaltungen OS0 und OS1 und einer zugehörigen schmalbandigen Ausgangsschaltungssteuerung OCS sowie zwei breitbandige Eingänge mit den breitbandigen Eingangsschaltungen IB0 und IB1 und einer zugehörigen breitbandigen Eingangsschaltungssteuerung ICB und zwei breitbandige Ausgänge mit den breitbandigen Ausgangsschaltungen OB0 und OB1 und einer zugehörigen breitbandigen Ausgangsschaltungssteuerung OCB.

Die Ein- und Ausgänge sind untereinander unter Zuhilfenahme eines Datenspeichers MEM verbunden. Von jeder Eingangsschaltung aus kann in jedes Speicherelement des Datenspeichers MEM eingeschrieben werden; aus jedem Speicherelement kann wiederum zu jeder Ausgangsschaltung hin ausgelesen werden. Die erforderlichen Multiplexer- und Demultiplexerfunktionen sind in Fig. 2 nicht eingezeichnet. Insgesamt ergibt sich derselbe Grundaufbau wie in Bild 7 des genannten Artikels von D. Böttle et al. oder wie in Fig. 5 des genannten US-Patentes 5,091,903. Im übrigen sind dieser Grundaufbau sowie die notwendigen Detailgestaltungen jedem Fachmann auf diesem Gebiet bekannt.

Im vorliegenden Fall sind nun die breitbandigen Ein- und Ausgänge als ATM-Ein- und -Ausgänge wie in den oben genannten Beispielen ausgeführt, während die schmalbandigen Ein- und Ausgänge im Prinzip wie bei SYSTEM 12 ausgeführt sind.

Zum Aufbau des Vermittlungselementes bei SYSTEM 12 wird auf einen Artikel von W. Frank et al. verwiesen, der 1985 erschienen ist in "Elektrisches Nachrichtenwesen", Band 59, Nummer 1/2, Seiten 54 - 59 mit dem Titel "SYSTEM 12 - Doppelport des Koppelnetzbausteins". Auch die zu SYSTEM 12 bereits genannten US-Patente beschreiben das Vermittlungselement. Abweichend von der Realisierung bei SYSTEM 12 wird im vorliegenden Fall jedoch ein zentraler Datenspeicher und nicht eine Vielzahl den einzelnen Ausgängen zugeordneter Datenspeicher verwendet. Werden im vorliegenden Fall den beiden schmalbandigen Ausgangsschaltungen OS0 und OS1 bestimmte Speicherelemente des Datenspeichers MEM fest zugeordnet, so ist insoweit wieder Übereinstimmung gegeben.

Auf der Schmalbandseite erfolgt der Datenfluß zwischen den Eingangsschaltungen, dem Datenspeicher und den Ausgangsschaltungen durch 16 Bit breite, parallel übertragene Datenwörter. Auf der Breitbandseite werden Datenwörter mit 64 Bit verwendet. Die 16 Bit auf der Schmalbandseite entsprechen je einem Zeitschlitz im dort verwendeten Zeitmultiplex. Die 64 Bit auf der Breitbandseite entsprechen je einem ATM-Datenpaket.

Dem Datenspeicher MEM ist eine Wegewahlsteuerung RC angegliedert. Diese fügt den von den schmalbandigen Eingangsschaltungen kommenden Datenwörtern je einen Paketkopf hinzu, der für die Vermittlung im ATM-Koppelnetz und für die Zuordnung in der ausgangsseitigen Modulsteuereinheit benötigt wird. Jedem Zeitschlitz in jeder der beiden schmalbandigen Eingangsschaltungen wird während des Verbindungsaufbaus eindeutig ein Paketkopf zugeordnet. Umgekehrt ist jedem von den breitbandigen Eingangsschaltungen kommenden Paketkopf eindeutig ein Zeitschlitz einer der beiden schmalbandigen Ausgangsschaltungen zugeordnet. Ein Teil der 64 Bits eines breitbandigen Datenworts bleibt unbenutzt.

Die Zugangseinheit BTER enthält weiter einen Taktgenerator Cl, der Takte mit 8 kHz, 4 MHz, 8 MHz und 155 MHz erzeugt. Diese Takte sind auf von außen zugeführte Takte von 8 MHz, 19,44 MHz und einen Rahmentakt FRAME synchronisiert. Die von außen kommenden Takte sind aus Zuverlässigkeitsgründen dupliziert. Die Frequenzangaben sind hier teilweise (auch unterschiedlich wie bei 150 Mbit/s und 155 Mbit/s) gerundet.

Die zugrundeliegende Vermittlungsstelle vom Typ SYSTEM 12 hat auch die Möglichkeit, Datenpakete zu vermitteln sowie die Modulsteuereinheiten untereinander durch Datenpakete kommunizieren zu lassen.

Auch diese Möglichkeiten sind hier vorgesehen. Zu diesem Zweck, der unter anderem dem Verbindungsauf- und -abbau dient, sind noch ein schmalbandiger Steuerein- und -ausgang PS, ein breitbandiger Steuerein- und -ausgang PB und eine dazugehörige Wegelenkeinrichtung PR vorhanden. Diese sind untereinander und mit der Wegewahlsteuerung RC durch einen 64 Bit breiten Bus verbunden. Die Steuerein- und -ausgänge PS und PB sind mit den zugehörigen Eingangs- und Ausgangsschaltungssteuerungen ICS und OCS bzw. ICB und OCB über 16 bzw. 64 Bit breite parallele Datenleitungen verbunden. Außerdem ist die Wegelenkeinrichtung PR mit dem Steuerprozessor CC und dessen Speicher CMEM über einen 32 Bit breiten Bus verbunden.

Auf der Schmalbandseite werden Datenpakete als Ganzes einschließlich des Paketkopfes in aufeinanderfolgenden, demselben Übertragungskanal zugehörigen Zeitschlitzen übertragen. In einer der beiden schmalbandigen Eingangsschaltungen IS0 und IS1 ankommende Datenpakete werden durch die zugehörige Eingangsschaltungssteuerung ICS als solche erkannt und, unterstützt durch den Steuerprozessor CC, über den schmalbandigen Steuerein- und -ausgang PS und die Wegelenkeinrichtung PR in den Speicher CMEM eingeschrieben. Umgekehrt werden für die Schmalbandseite bestimmte Datenpakete vom Speicher CMEM über die Wegelenkeinrichtung PR, den schmalbandigen Steuerein- und -ausgang PS und die schmalbandige Ausgangsschaltungssteuerung OCS über die vorgesehene schmalbandige Ausgangsschaltung OS0 oder OS1 ausgegeben. Ganz entsprechend erfolgt der Austausch von Datenpaketen zwischen einer der breitbandigen Eingangsschaltungen IB0 und IB1 und dem Speicher CMEM und zwischen diesem und einer der breitbandigen Ausgangsschaltungen OB0 und OB1. Abweichend ist hier nur das Datenformat.

Datenpakete, die nicht für diese Modulsteuereinheit bestimmt sind, werden zunächst von der einen Seite her in den Speicher CMEM eingeschrieben und dann aus diesem zur anderen Seite hin ausgegeben. Beides verläuft wie oben beschrieben.

Eingezeichnet ist noch die Tatsache, daß die Wegelenkeinrichtung PR vom Taktgenerator Cl mit dem Takt von 155 MHz und von außen mit Zeitmarken TSTP versorgt wird. Die Zeitmarken, die ebenfalls dupliziert zugeführt werden, werden den Datenpaketen innerhalb des Koppelnetzes mitgegeben.

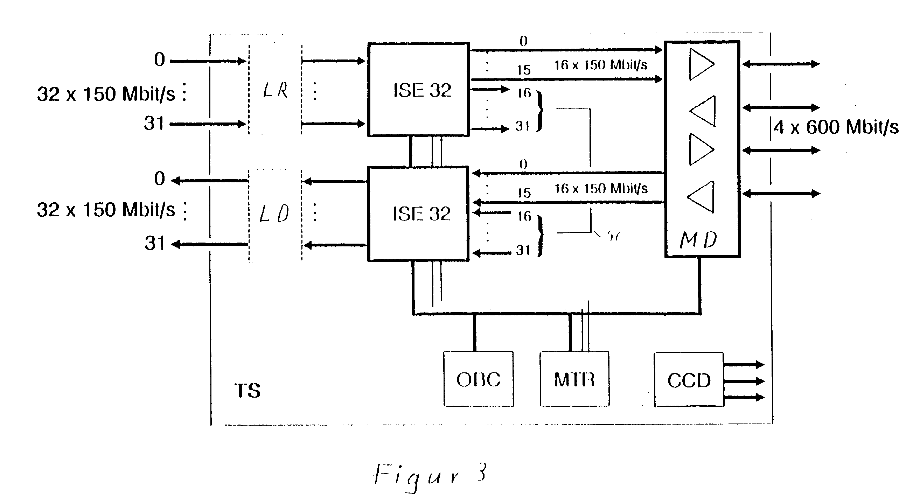

Anhand der Fig. 3 wird abschließend noch der Aufbau einer Abschluß-Koppeleinheit TS beschrieben. Die Abschluß-Koppeleinheit TS weist zwei Koppelnetzbausteine ISE32, einen Muldex MD, eine Steuereinheit OBC, eine Wartungs- und Test-Einrichtung MTR und eine Taktversorgungseinrichtung CCD auf. Als Zusätze sind Leitungsempfänger LR und Leitungssender LD sowie Kurzschlußbrücken SC vorgesehen.

Die beiden Koppelnetzbausteine ISE32 weisen je 32 Eingänge und 32 Ausgänge auf. Jeder Koppelnetzbaustein ist für eine der beiden Richtungen zuständig. Die Koppelnetzbausteine unterscheiden sich nicht prinzipiell von den Koppelnetzbausteinen der ersten oder zweiten Stufe, PS10, ..., PS15; PS20, ..., PS23 und den Zugangs-Koppelnetzbausteinen AS0, ..., AS3.

In der Richtung von der Peripherie zum Koppelnetz erfolgt eine Konzentration von 32 Eingangs- auf 16 Ausgangsleitungen mit je 150 Mbit/s. Im Multiplexerteil des Muldex MD wird der Verkehr von 16 mal 150 Mbit/s auf 4 mal 600 Mbit/s umverteilt. In der Gegenrichtung wird im Demultiplexerteil des Muldex MD von 4 mal 600 Mbit/s auf 16 mal 150 Mbit/s umverteilt und im zugehörigen Koppelnetzbaustein ISE32 von 16 Eingangsauf 32 Ausgangsleitungen aufgeteilt.

Der Muldex MD faßt außerdem auf der Seite mit 600 Mbit/s die beiden Richtungen auf derselben Leitung zusammen und setzt auf dieser Seite auch zwischen elektrischen Signalen im Muldex und optischen Signalen auf den Leitungen um.

An dieser Stelle wird noch darauf hingewiesen, daß in den Figuren 2 und 3 die beiden Richtungen explizit gezeigt sind, während in Fig. 1 immer für beide Richtungen eine Verbindung eingezeichnet ist, unabhängig davon, ob diese auf einer gemeinsamen Leitung oder auf getrennten Leitungen geführt werden. Dies ist prinzipiell auch unerheblich.

Die 16 zunächst noch freien Aus- bzw. Eingänge der beiden Koppelnetzbausteine ISE32 können durch Kurzschlußbrücken SC verbunden sein, um so eine frühe Umkehrmöglichkeit zu bieten.

Leitungsempfänger LR und Leitungssender LD werden dann eingesetzt, wenn die Leitungslängen zu den angeschlossenen Modulsteuereinheiten dies erfordern.

Die Steuerung der Abschluß-Koppeleinheit TS erfolgt in an sich bekannter Weise durch die Steuereinrichtung OBC. Auch die Wartungs- und Test-Einrichtung MTR ist, wie auch die Leitungsempfänger LR, die Leitungssender LD und der Muldex MD in bekannter Weise und nicht erfindungsspezifisch aufgebaut.

Der Einsatz von Abschluß-Koppeleinheiten TS ist nicht erfindungswesentlich. Es könnten auch Koppelnetzstrukturen ohne solche Abschluß-Koppeleinheiten verwendet werden, wie auch grundsätzlich andere Koppelnetzstrukturen möglich sind.

## Patentansprüche

1. Vermittlungsstelle mit einem digitalen Koppelnetz (TS, AS, PS) und daran angeschlossenen peripheren Baugruppen (T0, ..., T6143), in der die peripheren Baugruppen dem Anschluß von Teilnehmern, von anderen Vermittlungsstellen, von Wartungseinrichtungen oder der Erfüllung anderer Aufgaben dienen und in der das Koppelnetz der Herstellung wahlfreier Verkehrsbeziehungen der Baugruppen untereinander dient, insbesondere zum Herstellen vermittelter Verbindungen zwischen angeschlossenen Teilnehmern oder Vermittlungsstellen,
**dadurch gekennzeichnet,** daß das digitale Koppelnetz am Übergang (TCE0, ..., TCE6143) zu den peripheren Baugruppen mehr als zweifach überdimensioniert ist.

2. Vermittlungsstelle nach Anspruch 1, dadurch gekennzeichnet, daß die Überdimensionierung durch einen höheren Takt (155 MHz) im Koppelnetz gegenüber den peripheren Baugruppen (4 MHz) erreicht wird.

3. Vermittlungsstelle nach Anspruch 2, dadurch gekennzeichnet, daß das Koppelnetz ein Breitband-Koppelnetz ist und daß die peripheren Baugruppen Schmalband-Baugruppen sind.

4. Vermittlungsstelle nach Anspruch 3, dadurch gekennzeichnet, daß das Koppelnetz ein ATM-Koppelnetz ist.

5. Vermittlungsstelle nach Anspruch 3, dadurch gekennzeichnet, daß der Übergang zwischen dem Koppelnetz und den peripheren Baugruppen durch Vermittlungselemente (TCE) mit schmalbandigen (IS0, IS1; OS0, OS1) und breitbandigen (IB0, IB1; OB0, OB1) Ein- und Ausgängen erfolgt.
